# EUROPÄISCHE PATENTSCHRIFT

(11) **EP 3 717 546 B1**
(45) Veröffentlichungstag und Bekanntmachung des Hinweises auf die Patenterteilung: **31.12.2025**
(21) Anmeldenummer: 18812130.5
(22) Anmeldetag: 29.11.2018
(51) Int. Cl.: C08H 7/00, C07G 1/00

(54) **MODIFIZIERTES LIGNIN, VERFAHREN ZU DESSEN HERSTELLUNG UND VERWENDUNG**
MODIFIED LIGNIN, METHODS OF PREPARATION, AND USE
LIGNINE MODIFIEE, PROCEDES DE PREPARATION ET UTILISATION

(30) Priorität: 29.11.2017 DE 102017128339
(43) Veröffentlichungstag der Anmeldung: 07.10.2020
(73) Patentinhaber: Technikum Laubholz GmbH, 73033 Göppingen (DE)
(72) Erfinder: CLAUSS, Manuel Maximilian, 73760 Ostfildern (DE); FRANK, Erik, 89160 Dornstadt (DE); BUCHMEISER, Michael R., 73630 Remshalden (DE)
(74) Vertreter: Meissner Bolte Partnerschaft mbB
(86) Internationale Anmeldenummer: PCT/EP2018/082990
(87) Internationale Veröffentlichungsnummer: WO 2019/106080

(56) Entgegenhaltungen:
- WO-A1-2010/081775
- WO-A1-2015/123781
- US-A- 4 769 434
- YONGSHENG ZHANG ET AL: "Sustainable bio-phenol-hydroxymethylfurfural resins using phenolated de-polymerized hydrolysis lignin and their application in bio-composites", INDUSTRIAL CROPS AND PRODUCTS, vol. 79, 1 January 2016 (2016-01-01), NL, pages 84 - 90, XP055557071, ISSN: 0926-6690, DOI: 10.1016/j.indcrop.2015.10.048
- ZHANG YONGSHENG ET AL: "Sustainable bio-phenol-hydroxymethylfurfural resins using phenolated de-polymerized hydrolysis lignin and their application in bio-composites", INDUSTRIAL CROPS AND PRODUCTS, ELSEVIER, NL, vol. 79, 6 November 2015 (2015-11-06), pages 84 - 90, XP029362450, ISSN: 0926-6690, DOI: 10.1016/J.INDCROP.2015.10.048
- DIMITRIS S. ARGYROPOULOS ET AL: "Synthesis and Characterization of Poly(arylene ether sulfone) Kraft Lignin Heat Stable Copolymers", ACS SUSTAINABLE CHEMISTRY & ENGINEERING, vol. 2, no. 2, 24 October 2013 (2013-10-24), US, pages 264 - 271, XP055557087, ISSN: 2168-0485, DOI: 10.1021/sc4002998
- PESSALA P ET AL: "Biological effects of high molecular weight lignin derivatives", ECOTOXICOLOGY AND ENVIRONMENTAL SAFETY, ACADEMIC PRESS, SAN DIEGO, CA, US, vol. 73, no. 7, 1 October 2010 (2010-10-01), pages 1641 - 1645, XP027320708, ISSN: 0147-6513, [retrieved on 20100521]

## Beschreibung

Die Erfindung betrifft ein modifiziertes Lignin auf Basis von substituiertem und unsubstituiertem Lignin (A), wobei die Lignin-Moleküle des substituierten und unsubstituierten Lignins (A) zur Molekulargewichtserhöhung mit Verknüpfungseinheiten (B) verbunden sind, ein Verfahren zur Herstellung des modifizierten Lignins und dessen Verwendung zur Herstellung von Präkursorfasern, die anschließend in Carbonfasern überführt werden können.

Die Nachfrage nach Carbonfasern zur Herstellung von CFK Leichtbauteilen steigt stetig. Insbesondere im Massenmarkt wie dem der Automobilindustrie werden große Wachstumsraten erwartet. Bisher sind die hohen Kosten insbesondere in der Fertigung dieser CFK Leichtbauteile sowie die relativ hohen Kosten von Carbonfasern der Grund dafür, dass solche Produkte für den Massenmarkt noch nicht erschwinglich sind. Im Feld der Fertigung der CFK Leichtbauteile wurden in den letzten Jahren vielversprechende Verfahren entwickelt, die eine schnelle, präzise, automatisierte und damit günstige Fertigung ermöglichen. Im Falle der Carbonfaser sind bisher einige Anstrengungen unternommen worden, um die Qualität beizubehalten, die Kosten jedoch zu senken. Das betrifft sowohl eine Optimierung des Herstellungsverfahrens als auch die Verwendung des Präkursormaterials. Gegenwärtig werden Carbonfasern überwiegend (> 95 %) aus Polyacrylnitril hergestellt. Dieses wird nasschemisch durch Polymerisation von Acrylnitril mit einem geringen Anteil an Comonomeren hergestellt. Acrylnitril selbst entstammt dem Sohio-Prozess und wird aus Ammoniak und erdölbasiertem Propen synthetisiert. Die Umwandlung des Polymerpulvers zur Polymerfaser erfolgt durch einen speziellen Nassspinnprozess. Dieser benötigt große Mengen zusätzliches Lösungs- und Fällungsmittel und ist zudem sehr langsam.

Daher konzentrieren sich viele Forschungsarbeiten auf die Entwicklung alternativer nachwachsender, erdölunabhängiger Präkursoren für Carbonfasern. Dazu gehören die Biopolymeren Cellulose und Lignin. Insbesondere Lignin stellt einen attraktiven potentiellen Präkursor dar, denn es enthält von Natur aus einen hohen Gehalt an aromatischen Strukturen und weist damit auch eine hohe Kohlenstoffausbeute auf. Lignin konkurriert nicht mit Nahrungsmitteln und fällt bei der Papierherstellung und bei Bioraffinerien als Abfallprodukt an. Eine große Herausforderung bei der stofflichen Nutzung von Lignin sind seine möglicherweise stark schwankenden Eigenschaften und Reinheit sowie die chemische Zusammensetzung und Struktur dieses Biopolymers. Für eine polymere Nutzung von Lignin steht man vor der Tatsache, dass Lignin als Abfallstoff der Papierindustrie zwar polymere Anteile hat, es sich im Mittel jedoch um niedermolekulare Oligomere mit einem sehr geringen Polymerisationsgrad und einer stark verzweigten, teilweise vernetzten Struktur handelt. Dies ist die Folge der Fragmentierungsumsetzungen, die während des Aufschlusses aus Holz erfolgen. In der Tat ist dort das Ziel, Cellulose möglichst unbeschädigt als Polymer zu erhalten, wozu das umgebende Lignin chemisch fragmentiert wird. Es weist daher geringe Molekulargewichte und eine hohe Polydispersität auf. Um Lignin als polymeren Stoff zu nutzen, können Membranfiltration oder fraktionierte Fällung genutzt werden, um die Fraktionen mit den gewünschten Molekulargewichten und Eigenschaften zu erhalten. Leider hat dies eine hohe Abfallquote zur Folge. Das Produkt ist nach wie vor von stark verzweigter Struktur. Die niedermolekulare Natur des Lignins äußert sich vor allem in einer mechanisch schwachen Belastbarkeit und Sprödigkeit des Materials.

Für die Nutzung von Lignin als Ausgangsmaterial für Carbonfasern ist eine möglichst lineare und polymere Struktur gewünscht. Diese Struktur ermöglicht eine Ausrichtung der Moleküle in Faserachse während des Spinnprozesses und erhöht die mechanische Belastbarkeit sowohl der Präkursorfaser als auch der daraus gewonnenen Carbonfaser. Insbesondere die bisher viel zu geringe mechanische Belastbarkeit der Präkursorfaser ist ein Grund dafür, weshalb bis heute keine Lignin-basierte Carbonfaser als marktfähiges Produkt existiert. Die Präkursorfasern sind spröde und nicht flexibel, was unter anderem auf das geringe Molekulargewicht zurückzuführen ist. Die Zugabe von flexiblen Hilfs-Polymeren ist nur zu einem geringen Anteil sinnvoll, da dadurch die Kohlenstoffausbeute des Gesamtmaterials in der Regel sinkt und die Qualität der Carbonfaser sich durch dadurch verursachte Fehlstellen drastisch verschlechtert. Daher ist es, ausgehend vom Stand der Technik, nötig, eine Methode zu entwickeln, die einen kontrollierten, linearen Molekulargewichtsaufbau von Lignin als Carbonfaser-Präkursor erlaubt. Bisherige Methoden zur Polymerisation von Lignin bzw. zur Herstellung von Polymeren mit kovalent gebundenem Lignin zielen meist nicht auf dessen Verwendung als Carbonfaser-Präkursor ab und sind daher ungeeignet. Einige dieser Methoden seien kurz vorgestellt.

In der US 4769434 A wird die basenkatalysierte Kondensation von Lignin mit bivalenten elektrophilen Verbindungen detailliert beschrieben. Die darin genannten Elektrophile sind Aldehyde, hydroxymethylierte Amine, phenolische Verbindungen sowie Isocyanate. In der US 3984363 A wird die Epoxidierung von Lignin unter alkalischen Bedingungen und nachfolgender Härtung durch (polymere) Amine behandelt. Als vernetzende Verbindungen kommen auch Carbonsäureanhydride sowie die Veresterung des Lignins mit vernetzungsfähigen Doppelbindungen in Frage. Herstellung und Verwendung polymerisierbarer Präpolymere aus Lignin sind dagegen in der US 5102992 A offenbart, wobei ein mit Alkylenoxid modifiziertes Lignin mit einer Acrylat-Funktion enthaltenden Verbindung reagiert wird, um polymerisierbare Präpolymere zu erhalten. Ein weiteres Feld der Polymere aus Lignin sind Lignin-basierte Polyurethane. Nach der US 9598529 B2 werden Polyurethanvorläufer mit Lignin gemischt und erhitzt, wodurch die Mischung polymerisiert. Ebenfalls geht Lignin mit Isocyanaten in Gegenwart von Polyolen eine Umsetzung ein, um ein Polymer zu bilden (sh. US 6025452 A). Als weiteres Feld der Polymere aus Lignin sind Copolymere aus Lignin und Polymilchsäure (PLA) zu nennen. So ist zum Beispiel in der US 20130281582 A1 beschrieben, wie ein Butansäureester von Lignin in Gegenwart von Polymilchsäure erhitzt wird, um ein Lignin-PLA-Graft-Copolymer zu erzeugen.

Eine ähnliche Chemie beschreibt die US 9567432 B2, wonach Lignin-Polylactidgraft-Copolymere synthetisiert werden. Diese lässt man mit Vernetzern, wie z.B. Hexamethylendiisocyanat, reagieren. Eine radikalische Polymerisation von Lignin zu einem Polymer ist in der US 5608040 A dargestellt, bei der Polymere aus Lignin und organischen Verbindungen mit mindestens 3 Kohlenstoffatomen in Gegenwart von radikalisch oxidierenden Enzymen gebildet werden. Zwei der wenigen konkreten Methoden, um polymeres Lignin als Präkursor für Carbonfasern herzustellen, offenbart die US 20130255216 A1. Eine Oxypropylierung von Lignin, gefolgt von einer Propargylierung, führt in mehreren Stufen zu einem kettenverlängerten Lignin-basierten Produkt (H. Sadeghifar, S. Sen, S. V. Patil, D. S. Argyropoulos, ACS Sus. Chem. Eng. 2016, 4, 5230-5237). Ferner wird von thermisch stabilen Polyarylenethersulfon-Lignin-Copolymeren berichtet, die aus Lignin und aromatischem Difluorodiphenylsulfon (DFDPS) hergestellt werden. Das Produkt hat eine erhöhte thermische Stabilität im Vergleich zu unbehandeltem Lignin (D. S. Argyropoulos, H. Sadeghifar, C. Cui, S. Sen, ACS Sus. Chem. Eng. 2014, 2, 264-271). Alle diese Methoden haben meist ein stark verzweigtes Produkt zur Folge oder ein Graft-Polymer, welches auf Basis von Lignin nicht linearisiert sein kann. Darüber hinaus finden als Copolymere und Comonomere aliphatische Verbindungen Einsatz, wie zum Beispiel Polymilchsäure. Im Schritt der thermischen Umwandlung des Lignins zur Carbonfaser führen diese aliphatischen Verbindungen zu geringen Kohlenstoff-Restmassen bzw. - Ausbeuten. Die Folgen sind hoher Materialverlust während der thermischen Umwandlung zur Carbonfaser, aber auch eine hohe Porosität der Carbonfaser und damit schlechte mechanische Eigenschaften derselben.

Der Erfindung liegt die Aufgabe zugrunde, die oben im Zusammenhang mit dem Stand der Technik beschriebenen Nachteile zu beheben, insbesondere ein modifiziertes Lignin der eingangs bezeichneten Art vorzuschlagen, das linear ausgerichtet ist und vorteilhaft in Carbonfasern umwandelbar ist, dies mit hoher Kohlenstoffausbeute, geringer Porosität und verbesserten mechanischen Eigenschaften der Carbonfaser.

Erfindungsgemäß wird diese Aufgabe durch ein modifiziertes Lignin der eingangs bezeichneten Art gelöst, das dadurch gekennzeichnet ist, dass die Verknüpfungseinheiten (B) aromatisch sind und mit den Lignin-Molekülen (A) über eine Methylengruppe verbunden sind, wobei die Verknüpfungseinheit (B) auf eine Umsetzung des Lignins (A) mit einer aromatischen Verknüpfungsverbindung (C) zurückgeht, die zwei Hydroxymethylgruppen enthält.

Als nicht substituiertes Lignin A eignen sich insbesondere Hartholz-, Weichholz-oder Gras-Lignine, dies sowohl underivatisiert als auch als derivatisiert. Als Lignin vom Typ des Aufschlusses eignen sich insbesondere alle gängigen Formen, wobei Organosolv- und Kraft-Lignine bevorzugt sind.

In verschiedenen Fällen ist es bevorzugt, dass das erfindungsgemäße modifizierte Lignin auf ein substituiertes Lignin zurückgeht, wobei das substituierte Lignin insbesondere durch die Formeln

L-O-CORₓ (I)

und/oder

L-OR_{y} (II),

dargestellt ist, worin bedeuten: der Rest L-O in den Formeln (I) und (II) einen veresterten oder veretherten Lignin-Rest, der Rest -CO-Rₓ in der Formel (I) einen Acyl-Rest, die Reste Rₓ und R_{y} einen aliphatischen und/oder aromatischen Rest. Hierzu gibt es konkretisierte vorteilhafte Ausgestaltungen. So ist eine derartige Ausgestaltung dadurch gekennzeichnet, dass die aromatischen Reste Rₓ und R_{y} einen Aryl-Rest, insbesondere einen Phenol-, Benzyl-, Methoxybenzyl- und/oder einen 3-Phenylpropenyl-Rest, darstellen. Ferner gilt es als bevorzugt, dass die aliphatischen Reste Rₓ und R_{y} einen geradkettigen oder verzweigten C₁₋₆-Alkyl-Rest, insbesondere einen Methyl-, Ethyl-, n-Propyl-, Isopropyl-, tert.-Butyl- oder einen neo-Pentyl-Rest, darstellen.

Bei Derivaten der vorstehend beschriebenen Formeln (I) und (II) haben sich, wie bereits dargestellt, kurzkettige Methyl (C1)- und Ethyl (C2)-Ether und Acetyl-Ester des Lignins als vorteilhaft erwiesen, wobei der Methyl-Ether gemäß Formel (II) im Vordergrund steht. In dieser Ausgestaltung der Erfindung sind insbesondere Organosolv-Lignine von Vorteil, die als Konsequenz ihres Herstellungsprozesses teilweise bereits verethert und/oder verestert sind, z.B. durch Essigsäureaufschluss. Ebenfalls als Derivat von Lignin kommt insbesondere phenolisiertes Lignin in Frage, bei welchem Phenol oder Phenolderivate mit reaktiven aromatischen Positionen kovalent an Lignin gebunden sind, wodurch die Zahl reaktiver Stellen am Lignin erhöht wird. Hierbei hat das Phenol im Allgemeinen die aliphatischen Hydroxylgruppen des Lignins substituiert und entspricht der Formel L-O-Phenol (III). Wichtig sind auch Betrachtungen zur Besetzung der Hydroxylgruppen des Ligninderivats in den oben angesprochenen Formeln (I) und (II). Hierbei gilt es als bevorzugt, dass 1% bis 100%, vorzugsweise 10 % bis 90 %, insbesondere 30 % bis 80 %, der Hydroxyl-Reste des Lignins entsprechend den Formeln (I) und (II) besetzt sind. Hinsichtlich des phenolisierten Lignins empfiehlt es sich, zwischen 1% und 80%, vorzugsweise 10 % bis 60 %, insbesondere zwischen 20 % und 50 %, der aliphatischen Hydroxylgruppen mit Phenol bzw. Phenolderivaten gemäß der Formel L-O-Phenol (III) zu besetzen.

Wesentlicher Bestandteil der Erfindung ist die Verknüpfungseinheit (B). Diese ist im weitesten Sinne aromatisch und mit den Lignin-Molekülen (A), substituiert oder unsubstituiert, über eine Methylengruppe verbunden. Sie wird im Rahmen des erfindungsgemäßen Verfahrens durch eine Verknüpfungsverbindung (C) in das erfindungsgemäße modifizierte Lignin eingeführt. Es sei auf die nachfolgenden diesbezüglichen Erläuterungen zur Verknüpfungsverbindung (C) wegen Einzelheiten verwiesen.

Unter Berücksichtigung dessen gilt, dass die Verknüpfungseinheit (B) auf eine Umsetzung des Lignins (A) mit einer aromatischen Verknüpfungsverbindung (C) zurückgeht, die mindestens zwei Hydroxymethyl-Gruppen, insbesondere zwei terminale Hydroxymethyl-Gruppen, aufweist und monomer, oligomer und/oder polymer ist, insbesondere ein 2,6-Bis(hydroxymethyl)-p-kresol, ein p-Kresol-basiertes Resol, Phenol-basiertes Resol und/oder eine Novolak-artige Verbindung mit terminal angeordneten Hydroxymethyl-Gruppen darstellt.

Es führt zu Vorteilen, wenn man dem molaren Verhältnis der Verknüpfungseinheit (B) zu den Lignin-Molekülen (A) Aufmerksamkeit zuwendet. So ist es vorteilhaft, wenn das molare Verhältnis der Verknüpfungseinheit (B) zu den Lignin-Molekülen (A), substituiert oder unsubstituiert, etwa 1:1 bis 1:7, insbesondere 1:2 bis 1:4 und besonders bevorzugt etwa 1:3, beträgt.

Das erfindungsgemäße modifizierte Lignin (A) zeigt eine Vielzahl relevanter vorteilhafter Eigenschaften:
So kennzeichnet sich das modifizierte Lignin insbesondere dadurch, dass dessen Aschegehalt, bestimmt nach DIN EN ISO 3451-4, weniger als 0,1 Gew.-% beträgt. Dieser Gesichtspunkt ist deswegen wichtig, weil es bekannt ist, dass sich ein zu hoher Anteil an Fremd-Ionen schädlich auf die Kohlenstoffstruktur und die Stabilität der Carbonfaser auswirken kann. Daher gilt es als zweckmäßig, wenn der Aschegehalt die obige bevorzugte Regel einhält, wonach weniger als 0,1 Gew.-% und/oder weniger als 1000 ppm Fremd-Ionen, insbesondere weniger als 500 ppm Fremd-Ionen, insbesondere in Form von Alkalimetall-Ionen, vorliegen. Die genaue Quantifizierung der in dem erfindungsgemäßen modifizierten Lignin enthaltenen Salze und Metalle kann über ICP-MS (induktivgekoppeltes-Plasma-Massenspektrometrie), nach geeigneter Kalibrierung erfolgen. Hier liegt eine sehr geringe Nachweisgrenze vor.

Von besonderer Bedeutung ist die komplexe Viskosität des erfindungsgemäßen modifizierten Lignins, dies in Abstimmung mit dem jeweiligen Zweck. So ist es bevorzugt, dass das modifizierte Lignin zum Zweck des Nass-, Trocken-Nass- und Trockenspinnens eine komplexe Viskosität in Lösung von 10 bis 500 Pa·s, insbesondere von 50 bis 300 Pa·s, bestimmt nach DIN 53019-4, aufweist, während für den Zweck des Schmelzspinnens eine komplexe Viskosität von 50 bis 2000 Pa·s, insbesondere von 100 bis 1000 Pa·s, bestimmt nach DIN 53019-4, vorteilhaft ist.

Darüber hinaus zeichnet sich das erfindungsgemäß modifizierte Lignin zum Zwecke des Schmelzspinnens dadurch aus, dass es vorzugsweise eine Glasübergangstemperatur (Tg) von 80 °C bis 220 °C, insbesondere von 100 °C bis 180 °C, bestimmt über die Dynamische Differenzkalorimetrie nach DIN EN ISO 11357-2, aufweist.

Grundsätzlich spielt auch das zahlenmittlere Molekulargewicht erfindungsgemäß eine bedeutsame Rolle: So zeichnet sich das erfindungsgemäße Lignin dadurch aus, dass es vorzugsweise ein zahlenmittleres Molekulargewicht von 2000 bis 50000 g/mol, insbesondere von 4000 bis 40000 g/mol, aufweist. Das gewichtsmittlere Molekulargewicht bewegt sich hierbei zwischen 10.000 und 250.000 g/mol, insbesondere zwischen 20.000 bis 100.000 g/mol. Die obigen Hinweise helfen dem Fachmann, spezielle strukturelle Eigenschaften des erfindungsgemäßen Produktes einzustellen, so eine wünschenswerte Linearität, den Grad der Verzweigung und der Vernetzung. Diese können fachmännisch durch Einstellen des optimalen stöchiometrischen Verhältnisses zwischen Lignin (A) und Verknüpfungsverbindung (B) gesteuert werden.

Wichtig ist es also im Rahmen der praktischen Verwirklichung der Erfindung auch, wenn man dem zahlenmittleren Molekulargewicht (Mₙ) des Ausgangs-Lignins bzw. des Ligninderivats A Aufmerksamkeit zuwendet. Dabei hat es sich als vorteilhaft erwiesen, von einem zahlenmittleren Molekulargewicht (Mₙ) von 200 bis 30.000 g/mol, insbesondere von 300 bis 10.000 g/mol, auszugehen. Das gewichtsmittlere Molekulargewicht (M_{w}) bewegt sich vorzugsweise zwischen 1.000 und 40.000 g/mol, insbesondere zwischen 2.000 und 20.000 g/mol. Das verwendete Lignin bzw. Lignin-Derivat umfasst auch Fraktionen von Lignin bzw. Lignin-Derivat (A), die aus der Fraktionierung von Lignin bzw. Lignin-Derivat, insbesondere nach der Teilchengröße, hervorgegangen sind. So lässt sich zweckmäßigerweise die fraktionierte Fällung von Lignin heranziehen, die bereits beim Herstellungs- bzw. Isolationsprozess des Lignins durchführbar ist, wie auch die sequentielle Extraktion von Lignin sowie die Ultrafiltration von Lösungen von Lignin. Fraktioniertes Lignin hat dadurch eine geringere Polydispersität als das Ausgangslignin, was der Kalkulation der Stöchiometrie der Umsetzung im Rahmen des nachfolgend geschilderten erfindungsgemäßen Verfahrens förderlich ist, sowie möglicherweise ein höheres Ausgangsmolekulargewicht. Daher ist es bevorzugt, wenn das verwendete Lignin (A), substituiert oder unsubstituiert, eine möglichst geringe Polydispersität aufweist, bevorzugt < 8, insbesondere < 6 . Um das nachfolgend geschilderte erfindungsgemäße Verfahren vorteilhaft durchzuführen bzw. die Umsetzung von Lignin (A) mit Verknüpfungsverbindung (C) vorteilhaft zu ermöglichen, sind reaktive aromatische Stellen am Lignin (A) vorteilhaft. Bei diesen Stellen kann es sich handeln um: H-besetzte aromatische Positionen in α-Stellung zur phenolischen Hydroxylgruppe des Lignins (entspricht einer Guaiacyl-Einheit) sowie H-besetzte aromatische Positionen, ortho-ständig zu Ether-Gruppen des Lignins, wobei es sich bei diesen Ether-Gruppen in der Regel um die natürlich enthaltenen Methoxy-Gruppen handelt, sowie um Ligninverknüpfende Etherbrücken. Als reaktive Stellen zählen hier auch die freien aromatischen Positionen von Phenol und Phenolderivaten, die durch eine Phenolisierungs-Umsetzung von Lignin kovalent an dasselbe gebunden wurden. Es ist daher bevorzugt eine Mindestmenge dieser freien Stellen im Lignin vorzufinden.

Auch hier spielt die Zweckbestimmung eine Rolle, d.h., ob das modifizierte Lignin durch Nass-, Trocken-Nass- oder Trockenverspinnen oder zum Schmelzspinnen von Präkursorfasern herangezogen wird. So ist es bevorzugt, dass es zum Zweck des Nass-, Trocken-Nass- und Trockenverspinnens zu Präkursorfasern ein zahlenmittleres Molekulargewicht von 2.000 bis 50.000 g/mol, insbesondere von 4.000 bis 40.000 g/mol, aufweist. Wird es zum Zweck des Schmelzspinnens zu Präkursorfasern herangezogen, dann liegt das zahlenmittlere Molekulargewicht vorteilhafterweise zwischen 2000 und 15.000 g/mol, insbesondere zwischen 4.000 und 10.000 g/mol.

Gegenstand der Erfindung ist zudem ein Verfahren zur Herstellung eines modifizierten Lignins, insbesondere eines modifizierten Lignins der vorstehend detailliert beschriebenen erfindungsgemäßen Art, das dadurch gekennzeichnet ist, dass das substituierte und/oder unsubstituierte Lignin (A) in einem Lösungsmittel gelöst und in der Lösung mit einer aromatischen Verknüpfungsverbindung (C), die mindestens zwei Hydroxymethyl-Gruppen, insbesondere zwei terminale Hydroxymethyl-Gruppen, aufweist, in Gegenwart einer organischen Säure (D) bei erhöhter Temperatur, insbesondere von 60°C bis 160°C, zu modifiziertem Lignin umgesetzt wird.

Zu den wesentlichen Umsetzungsverbindungen des erfindungsgemäßen Verfahrens gilt Folgendes: Es wird ein Lignin (A), im Sinne der Erfindung substituiert und/oder unsubstituiert, mit einer aromatischen Verknüpfungsverbindung (C), die mindestens zwei Hydroxyl-Methyl-Gruppen, insbesondere zwei terminale Hydroxyl-Methyl-Gruppen, aufweist, umgesetzt. Zum Lignin (A) sei auf die vorstehenden Ausführungen zu dem erfindungsgemäßen modifizierten Lignin verwiesen. Die aromatische Verknüpfungsverbindung (C) führt durch die Umsetzung nach dem erfindungsgemäßen Verfahren zu der Verknüpfungseinheit (B) des erfindungsgemäßen modifizierten Lignins. Die Verknüpfungsverbindung (C) zeichnet sich dadurch aus, dass sie, wie hervorgehoben, mindestens zwei terminale Hydroxymethyl-Gruppen aufweist. Sie hat aromatischen Charakter und kann monomer, oligomerer und/oder polymerer Natur sein. Bevorzugte Beispiele wurden vorstehend bezeichnet, worauf verwiesen sei. Diese Verbindungen zeichnen sich also durch terminal angebrachte Hydroxymethyl-Gruppen aus. Die nachfolgenden Abbildungen stellen chemische Strukturen möglicher Verknüpfungsverbindungen unter Zugrundelegung von 2,6-Bis-hydroxymethyl-p-kresol (n = 1) und ein p-Kresol-Resol dar.

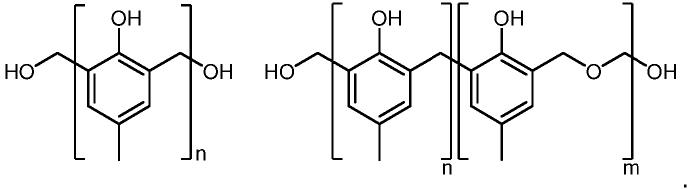

Für die zweite Formel gilt vorzugsweise 1 ≤ m+n ≤ 40, insbesondere 1 ≤ m+n ≤ 10, und ganz besonders bevorzugt 1 ≤ m+n ≤ 5.

Grundsätzlich kann es sich um ein aromatisches Ringsystem handeln, das auf einem Benzolring beruht. Es können auch weitere (kondensierte) aromatische Systeme herangezogen werden, insbesondere Naphthalin, Anthracen und dergleichen. Wie in den obigen Abbildungen gezeigt, befinden sich die mindestens zwei terminalen Hydroxymethyl-Gruppen vorzugsweise in meta-Stellung zueinander. Grundsätzlich wäre auch eine para-Stellung dieser beiden Gruppen möglich,
wobei eine ortho-Anordnung aus sterischen Gründen nicht als bevorzugt erscheint. Schließlich stellt sich die Frage der geeigneten Substituenten am aromatischen System. Diese Fragestellung berührt nicht den Kern der vorliegenden Erfindung. Dem Fachmann ist es problemlos möglich, hier geeignete Substituenten zu finden, so beispielsweise eine Hydroxyl-Gruppe oder eine niedere Alkyl-Gruppe, insbesondere eine Alkyl-Gruppe mit 1 bis 6 Kohlenstoffatomen.

Weiteres zu den oben dargestellten chemischen Strukturen der Verknüpfungsverbindung (C): Den Kern der Repetiereinheit dieser Verknüpfungsverbindungen bilden aromatische Monomere wie Phenol, Kresol, Hydroxyphenol und auch aromatische Systeme, die nicht auf Benzol beruhen, wie z.B. Furane, Pyrrole, Thiophene und andere aromatische Heterozyklen.

p-Kresol hat sich hier als besonders vorteilhaft erwiesen. Prinzipiell sind Repetiereinheiten zwischen 1 und mehreren hundert möglich, wobei jedoch der Rahmen von 1 bis 60, vorzugsweise von 1 bis 40, insbesondere von 1 bis 20, vorteilhaft ist. Das monomere 2,6-Bis-hydroxymethyl-p-Kresol mit einer Anzahl an Repetiereinheiten von 1 nimmt erfindungsgemäß eine besondere Stellung ein, da die später beschriebene Umsetzung zum Molekulargewichtsaufbau in äußerst zufriedenstellender Weise abläuft und nur einen geringen Massenanteil an der Gesamtmasse des Produkts einnimmt. Die Polydispersität der oligomeren bzw. polymeren Verknüpfungsverbindung sollte bevorzugt so niedrig wie möglich sein, da dadurch eine optimierte Berechnung der Stöchiometrie zwischen Lignin (A) und Verknüpfungsverbindung (C) erfolgen kann.

Allgemein lässt sich herausheben, dass das erfindungsgemäße Verfahren dadurch vorteilhaft gesteuert wird, indem Lignin (A), sei es unsubstituiert oder substituiert, mit einer aromatischen Verknüpfungsverbindung C unter handwerklich eingestellten stöchiometrischen Bedingungen einer Verbindung in Gegenwart einer organischen Säure (D) zur Umsetzung gebracht wird. Für die zur Umsetzung essentiellen chemischen Funktionalitäten trägt hierbei insbesondere die Verknüpfungsverbindung (C) und nicht gleichermaßen das Lignin (A) bei. Daher findet eine Umsetzung des Lignins A mit sich selbst im Wesentlichen nicht statt. Die Umsetzung wird im Wesentlichen durch die geregelte Zugabe an Verknüpfungsverbindung (C) gesteuert. Als Ergebnis dieser Umsetzung lassen sich somit Lignin-basierte Produkte, insbesondere mit erhöhtem zahlenmittlerem Molekulargewicht von mehr als Faktor 20, erreichen. Das Verfahrensprodukt hat mit einer optimal eingestellten Stöchiometrie eine nicht vernetzte und weitestgehend lineare Struktur. Das Umsetzungsprodukt kann insbesondere durch teilweises Evakuieren des eingesetzten Lösungsmittels direkt in eine Spinnmasse überführt werden. Es ist allerdings auch möglich, das Evaporieren bis zu einem Feststoff durchzuführen, um dann diesen in anderen geeigneten Lösungsmitteln zu lösen, um auf diese Weise eine geeignete Spinnmasse fachmännisch zu erhalten. Es besteht aber auch die Möglichkeit, hier in fachmännischer Weise eine chemische Funktionalisierung durchzuführen, um dieses Produkt schmelzbar zu machen und daraufhin durch Schmelzspinnen zu verarbeiten.

Besonders vorteilhaft ist es, wenn die Umsetzung bei einer Temperatur von 80°C bis 120°C, insbesondere von 90°C bis 110°C, durchgeführt wird. Die Umsetzung, die dem erfindungsgemäßen Verfahren zugrunde liegt, kann sowohl unter atmosphärischem Druck als auch unter erhöhtem Druck im Stahl-Autoklaven durchgeführt werden, wobei eine nicht-oxidative Atmosphäre vorteilhaft ist, zum Beispiel unter Stickstoff. Die Dauer der Umsetzung ist nicht kritisch. Doch gilt es als bevorzugt, wenn die Umsetzung während 5 bis 24 h, insbesondere 7 bis 15 h, durchgeführt wird. Hierbei hängt die besonders vorteilhafte Umsetzung der Umsetzungsdauer von verschiedenen Faktoren ab, wie zum Beispiel Art und Typ des verwendeten Lignins (A) und der Verknüpfungsverbindung (C).

Da bei der Umsetzung Wasser entsteht, ist es vorteilhaft, dem Umsetzungsmedium ein wasserabtrennendes Mittel, demzufolge zur Entfernung von Umsetzungswasser, zuzugeben. Der Zusatz von wasserabtrennenden Mitteln kann dazu dienen, die Umsetzung zu beschleunigen, da als Kondensationsprodukt der Umsetzung Wasser entsteht. In den Fällen des Einsatzes von 1,4-Dioxan als Lösungsmittel und der polar aprotischen Lösungsmittel als Umsetzungsmedium übernehmen diese bis zu einem gewissen Grad diese Funktion. Sofern das Lösungsmittel nicht ausreichend hygroskopisch ist, können insbesondere Molekularsiebe (z.B. 3A) oder ein Wasser-Schleppsystem dazu benutzt werden, um das Kondensationswasser bzw. Umsetzungswasser zu entfernen und damit die Umsetzung zu beschleunigen.

Im Hinblick auf die konkrete Zielsetzung der Erfindung bzw. der diesbezüglichen Anforderungen lässt sich im erfindungsgemäßen Verfahren als Ausgangsmaterial ein substituiertes Lignin (A), aber auch ein unsubstituiertes Lignin (A) einsetzen. Hierzu sei auf die vorausgehenden Erläuterungen zu dem unsubstituierten und substituierten Lignin verwiesen. Die im Rahmen des erfindungsgemäßen Verfahrens herangezogene aromatische Verknüpfungsverbindung (C) kennzeichnet sich, wie bereits angesprochen, insbesondere dadurch, dass sie mindestens zwei Hydroxymethylgruppen, insbesondere zwei terminale Hydroxymethylgruppen, aufweist, was insbesondere für oligomere und monomere aromatische Verknüpfungsverbindungen (C) gilt. Der Grund hierfür liegt darin, dass durch Verwendung zweier terminaler Hydroxymethylgruppen eine lineare Kettenverlängerung erreicht werden kann, wohingegen mehrere Hydroxymethylgruppen pro Verbindung C zu Verzweigungen führen.

Wie bereits erkennbar, kann die Verknüpfungsverbindung (C) monomer, oligomer und/oder polymer sein. Es handelt sich dabei insbesondere um ein 2,6-Bis(hydroxymethyl)-p-kresol, ein p-Kresol-basiertes Resol, Phenol-basiertes Resol und/oder eine Novolak-artige Verbindung mit terminal angeordneten Hydroxymethyl-Gruppen. Es hat sich bei der praktischen Durchführung des erfindungsgemäßen Verfahrens gezeigt, dass die oligomere und/oder die polymere Verknüpfungsverbindung (C) vorteilhafterweise eine Polydispersität unter 2, insbesondere unter 1,5, aufweist. Der Grund liegt darin, dass insbesondere dadurch eine akkurate stöchiometrische Kalkulation der Reaktion von Lignin und Verknüpfungsbindung erreicht werden kann und somit eine präzise Steuerung der Eigenschaften des erfindungsmäßen Verfahrenserzeugnisses.

Bei der Durchführung des erfindungsgemäßen Verfahrens sollte auch dem Molverhältnis von Verknüpfungsverbindung (C) und dem Lignin (A), ob substituiert oder unsubstituiert, Beachtung zugewandt werden. So ist es vorteilhaft, wenn die Verknüpfungsverbindung (C) und das Lignin (A) in einem molaren Verhältnis von etwa 1:1 bis 1:7, insbesondere 1:2 bis 1:4, besonders bevorzugt von etwa 1:3, zu modifiziertem Lignin umgesetzt werden.

Bei der Wahl der organischen Säure (D) unterliegt der Fachmann keiner kritischen Beschränkung. Es ist ihm ohne weiteres handwerklich möglich, die besonders geeignete organische Säure (D) zu ermitteln und entsprechend einzusetzen. Es ist mit Vorteilen verbunden, wenn die organische Säure (D), insbesondere in Form der p-Toluolsulfonsäure (p-TsOH) und/oder der Methansulfonsäure (MSA), einen pKₛ-Wert von < 3, insbesondere von < 2, aufweist.

Nachfolgend soll eine konkretere Darstellung des erfindungsgemäßen Verfahrens zu dessen weitergehender Erläuterung vorgenommen werden. Dabei wird auf besonders nützliche Erfahrungen, die im Zusammenhang mit der Erfindung gewonnen wurden, Bezug genommen.

Generell hat es sich gezeigt, dass insbesondere die Umsetzung von etwa 8,5 Gewichtsteilen underivatisierten Alcell-Lignins als Lignin (A) mit etwa 1 Gewichtsteil 2,6-Bis-hydroxymethyl-p-kresol als Komponente (C) in Gegenwart von etwa 1,0 Gewichtsteilen Methansulfonsäure als organische Säure (D) ein dem Anwendungszweck als polymerer linearisierter Carbonfaser-Präkursor mit erhöhtem Molekulargewicht ein sehr vorteilhaftes Produkt liefert, wobei das Lösungsmittel 1,4-Dioxan darstellt und die Umsetzungsdauer etwa 7 h bei etwa 100°C beträgt. Dieses Umsetzungsprodukt weist keine vernetzten Strukturen auf und ist vollkommen und leicht in den herangezogenen Umsetzungslösungsmitteln löslich. Teilweise lösliche bis hin zu vernetzten Umsetzungsprodukten erhält man demzufolge bei Gewichts-Verhältnissen von 2,6-Bis-hydroxymethyl-p-kresol zu Lignin (A) von größer 1:8,5 wie zum Beispiel 1:6, d.h. mehr Gewichtsteile Verknüpfungsverbindung (C) pro Teil Lignin (A).

Aufgrund dessen, dass nicht nur monomere Verbindungen (C) geeignet sind, sondern auch polymere Verbindungen (C), empfiehlt es sich, nicht nur die Gewichtsverhältnisse der Umsetzungskomponenten unter sich anzugeben, sondern die molaren Verhältnisse von Lignin (A) zu den Hydroxymethyl-Gruppen der Verknüpfungsverbindung (C). Daher gilt folgende Beziehung als bevorzugt: etwa 10 g Lignin (A) entsprechen bei einem zahlenmittleren Molekulargewicht des verwendeten Lignins (A) 20 mmol. Darauf kommen nach obiger Ausgestaltung 7 mmol Verknüpfungsverbindung (C), beinhaltend zwei terminale Hydroxymethyl-Gruppen, was etwa 3,5 mmol Hydroxymethyl-Gruppen entspricht. Daher hat es sich als zweckmäßig erwiesen, die vorteilhaften molaren Mengenverhältnisse zwischen der Verknüpfungsverbindung (C) und Lignin (A) (Lignin und/oder Lignin-Derivat) wie folgt darzustellen: Vorzugsweise entfallen auf etwa 1 Gewichtsteil Verknüpfungsverbindung (C) mit zwei reaktiven terminalen Hydroxymethyl-Gruppen 1 bis 6, insbesondere 2 bis 4, Gewichtsteile Lignin (A), besonders bevorzugt 3 Gewichtsteile Lignin (A). Die Menge an Verbindung (D), d.h. der organischen Säure (D), lässt sich gleichermaßen ausdrücken: Auf 3 Gewichtsteile Lignin entfallen etwa 2 Gewichtsteile der Verbindung D, insbesondere wenn diese monofunktional ist.

Auch das Molverhältnis zwischen Lignin (A) und organischer Säure (D) sollte optimiert werden. Es ist daher vorteilhaft, wenn auf 1 Mol Lignin (A) etwa 0,2 bis 1 Mol organische Säure (D), insbesondere 0,5 bis 1 Mol, eingesetzt wird.

Das erfindungsgemäße Verfahren wird unter Einsatz eines fachmännisch leicht bestimmbaren Lösungsmittels durchgeführt, insbesondere eines zum Lösen des Lignins (A), substituiert und/oder unsubstituiert. Hierzu steht dem Fachmann eine große Zahl geeigneter Lösungsmittel zur Verfügung. Besondere Eignung zeigen insbesondere 2,4-Dioxan, Mischungen aus 1,4-Dioxan und Wasser, Tetrahydrofuran (THF), insbesondere aber auch polare aprotische Lösungsmittel, wie Dimethylformamid (DMF), Dimethylsulfoxid (DMSO) und Dimethylacetamid (DMAc). Besondere Eignung zeigt der cyclische Ether 1,4-Dioxan, der zu starker Wasserstoffbrückenbildung mit Lignin fähig ist und unter Normalbedingungen lediglich einen Siedepunkt von 101°C aufweist und zudem mit Wasser gut mischbar ist.

Grundsätzlich gibt es noch die Möglichkeit, das erfindungsgemäße Verfahren weitergehend zu optimieren, indem additive Polymere einbezogen werden, dies insbesondere im Hinblick auf ein verbessertes Spinnverhalten und verbesserte mechanische Eigenschaften der aus dem Umsetzungsprodukt des erfindungsgemäßen Verfahrens erhaltenen Präkursorfasern. Hier kann es vorteilhaft sein, wenn das erfindungsgemäße modifizierte Lignin in eine Spinnmasse überführt, dass diese ein Hilfspolymer E enthält. Hierbei ist es zweckmäßig, dass es sich um einen Polyester (PES), ein Polyamid (PA), ein Polymethylmethacrylat (PMMA), Polyvinylacetat (PVAc), Polyvinylalkohol (PVA) oder Polyvinylpyrrolidon (PVP) handelt. Besondere Eignung zeigen Ester von Cellulose, wie z.B. 2,5-Acetat und Cellulose-acetat-butyrat. Des Weiteren gilt es als vorteilhaft, wenn das Hilfspolymer (E), bezogen auf die Masse an erfindungsgemäßem modifiziertem Lignin, darin in einer Menge von mindestens 5 Gew.-%, insbesondere von 10 bis 30 Gew.-%, vorliegt.

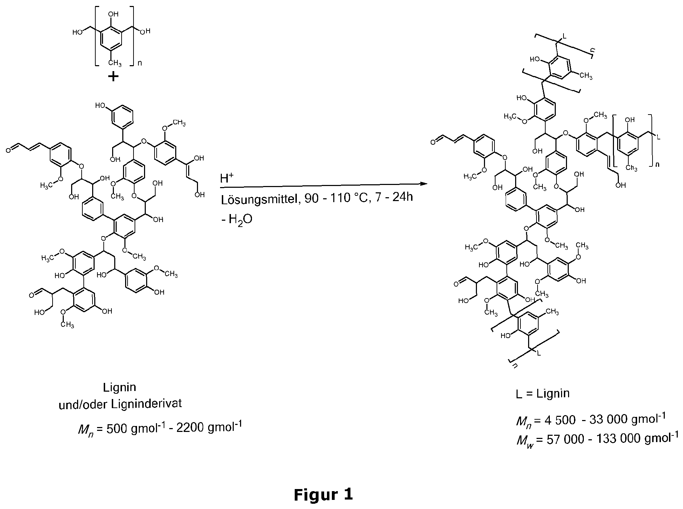

Zur weitergehenden Erläuterung des erfindungsgemäßen Verfahrens sei auf die nachfolgende Figur 1 verwiesen. Diese zeigt das Umsetzungsschema der erfindungsgemäß ablaufenden Umsetzung und eine typische mögliche chemische Struktur von Lignin (A) und die Struktur der Verknüpfungsverbindung (C). Niedermolekulares Lignin (A) und/Lignin-Derivat (A) wird mit einer monomeren, oligomeren oder polymeren Verknüpfungsverbindung in gelöster Form in Gegenwart einer organischen Säure zu einem höhermolekularen Lignin umgesetzt.

Der besondere Wert des erfindungsgemäßen Lignins bzw. des nach dem beschriebenen Verfahren hergestellten modifizierten Lignins liegt darin, dass es flexibel zur Herstellung von Präkursorfasern eingesetzt werden kann. So gilt allgemein, dass das modifizierte Lignin vorteilhaft zur Herstellung von Präkursorfasern durch Schmelzspinnen, insbesondere unter Einbezug eines Weichmachers, insbesondere in Form von monomeren Verbindungen, insbesondere DMF, DMSO, Phenol, Resorcin, Vanillin und Phthalsäureestern, oder durch Nass-, Trocken-Nass- oder Trockenspinnen herangezogen werden kann.

Die Präkursorfasern sind besonders gut zur Herstellung von Carbonfasern durch Carbonisierung, gegebenenfalls mit vorausgehender oxidativer Thermostabilisierung und gegebenenfalls mit nachfolgender Graphitisierung, geeignet. Zu diesen vorteilhaften Verwendungsmöglichkeiten des modifizierten Lignins im Einzelnen: Für den Zweck des Faserspinnens ist ein unvernetztes Produkt mit möglichst linearer Struktur von besonderem Vorteil, da auf diese Weise molekulare Vorzugsorientierungen in der Präkursorfaser besser erzeugt werden können. Die Orientierung der kettenartigen Moleküle in Faserachse ist besonders vorteilhaft, um eine mechanisch stabile Präkursorfaser zu erhalten. Die Orientierung transferiert sich auch über den thermischen Prozess hinweg in die letztlich herzustellende Carbonfaser, die dadurch ebenfalls bessere Eigenschaften zeigt. Das nicht vernetzte Produkt sollte daher vollkommen und leicht in den oben beschriebenen Lösungsmitteln, insbesondere 1,4-Dioxan, Mischungen aus 1,4-Dioxan und Wasser, Tetrahydrofuran (THF) und polaren aprotischen Lösungsmitteln, wie insbesondere DMF, DMSO und DMAc, löslich sein. Die Spinnmasse, die das erfindungsgemäße modifizierte Lignin enthält, ist je nach Ausführung entweder über einen Schmelzspinnprozess, wie gezeigt, über Schmelzspinnen oder Lösungsspinnen verarbeitbar. Die Spinnmasse für ein Lösungsspinnen enthält das erfindungsgemäße modifizierte Lignin und ein geeignetes Lösungsmittel, das sowohl direkt dem Umsetzungsgemisch der Synthese entstammen wie auch gesondert hinzugefügt werden kann. Zusätzlich können andere polymere Verbindungen der Spinnmasse beigefügt werden.

Als Lösungsmittel eignen sich insbesondere die oben bereits angesprochenen Lösungsmittel, allerdings auch ionische Flüssigkeiten. Bevorzugt handelt es sich bei diesen Lösungsmitteln um 1,4-Dioxan, Mischungen aus 1,4-Dioxan und Wasser, Tetrahydrofuran (THF) und polar aprotische Lösungsmittel, wie DMF, DMSO und DMAc. Besondere Eignung zeigte bei der praktischen Verwirklichung der Erfindung ein Lösungsmittel in Form von Dimethylformamid (DMF). Die komplexe Viskosität der Spinnmasse liegt bei der Verarbeitungstemperatur bevorzugt zwischen 10 und 500 Pa·s, insbesondere zwischen 50 und 300 Pa·s. Hierbei überwiegt der Verlustmodul den Speichermodul, bestimmt über rheologische Messungen im Frequenzbereich von 1 bis 100 1/s und konstanter Deformation von 10%.

Die Spinnmasse ist vorzugsweise frei von Partikeln und sollte insbesondere keinen gelartigen Charakter aufweisen. Eine bevorzugte Spinnmasse ist im Lichte der Konzentration des erfindungsgemäß modifizierten Lignins im Lösungsmittel wie folgt zu definieren: So hat es sich für das Faserspinnen als vorteilhaft erwiesen, wenn auf etwa 1 Gewichtsteil Lignin zwischen etwa 0,5 und 3, vorzugsweise zwischen 0,5 und 2, besonders bevorzugt zwischen 0,8 und 1,0 Gewichtsteile Lösungsmittel entfallen. Dieses gilt sowohl für die vorstehend bezeichneten Möglichkeiten des Lösungsspinnens, insbesondere in Form des Nassspinnens, des Air-Gap-Spinnens (Luftspalt-Spinnens) oder des Trockenspinnens. Für eine Verwendung des erfindungsgemäß modifizierten Lignins in Form einer schmelzprozessierbaren Spinnmasse wird vorzugsweise eine einfache chemische Derivatisierung desselben durchgeführt. Hierbei handelt es sich um Maskierungsumsetzungen der Hydroxyl-Gruppen des Produktes, bevorzugt um einfach durchführbare Veresterungen mit aliphatischen Carbonsäuren und Carbonsäure-Derivaten. Als besonders effektiv haben sich hierbei die eingefügten Hexanoyl-(C₆)-Reste erwiesen. Generell handelt es sich um die Formel L-O-CO-Rₓ (IV), wobei L das erfindungsgemäße (polykondensierte) Lignin (A) darstellt und x bevorzugt einen aliphatischer Rest C₃-C₁₁ darstellt. Von besonderem Wert sind hierbei aliphatische Reste, die ungesättigte Teile enthalten. Der Anteil der nichtveresterten, noch vorhandenen Hydroxyl-Gruppen des erfindungsgemäßen Produktes kann zwischen 1% und 100 %, vorzugsweise von 1% bis 90 %, insbesondere von 30 % bis 60 %, variieren.

Ziel der vorliegenden Erfindung ist es, anhand vorteilhafter Präkursorfasern, dies auf einem günstigen Verfahrensweg, Carbonfasern mit wertvollen Eigenschaften zu erzielen, insbesondere im Hinblick auf Zugfestigkeit sowie Elastizitätsmodul. Dabei ist es zweckmäßig, die erfindungsgemäßen Präkursorfasern in üblicher Weise zunächst einer oxidativen Thermostabilisierung zu unterziehen. Das thermostabilisierte Material wird dann in üblicher Weise einer Carbonisierung zur Herstellung von Carbonfasern unterzogen. Gegebenenfalls kann sich eine Graphitisierung anschließen.

Die oxidative Thermostabilisierung wird vorzugsweise bis zu einer Endtemperatur von 100°C bis 400°C, insbesondere von 200°C bis 300°C, durchgeführt. Die bevorzugten Heizraten bei der oxidativen Thermostabilisierung sind nicht kritisch. Es wird vorzugsweise eine Heizrate von weniger als 10 K/min, insbesondere weniger als 5 K/min, eingehalten, wobei die Mindest-Heizrate insbesondere mindestens 0,05 K/min beträgt. Es kann vorteilhaft sein, die thermo-stabilisierten Präkursorfasern einer Vernetzung mit hochenergetischer Strahlung zu unterziehen. Die Vernetzung kann mit hochenergetischer Strahlung, vorzugsweise mittels ultravioletter Strahlung (UV), Vakuum-Ultraviolettstrahlung (VUV), Elektronenstrahlung, Röntgenstrahlung oder Gammastrahlung erfolgen. Die Eigenschaften der erfindungsgemäß hergestellten Präkursorfasern haben einen wesentlichen Einfluss auf die Eigenschaften der damit hergestellten Carbonfasern. Die erhaltenen stabilisierten Präkursorfasern werden anschließend zu Carbonfasern carbonisiert. Diese werden dann gegebenenfalls graphitisiert.

Bei der Carbonisierung, die bei allmählich steigenden Temperaturen zwischen 300°C und 1.700°C, insbesondere 1.000°C bis 1.500°C, insbesondere in der Stickstoffatmosphäre durchgeführt wird, nimmt der Kohlenstoffgehalt stetig zu und erreicht etwa zwischen 85 - 95%. Durch die anschließende Graphitisierung lässt sich der Kohlenstoffgehalt der Carbonfasern auf > 95% erhöhen. Die gegebenenfalls durchgeführte Graphitisierung erfolgt durch eine thermische Behandlung bei 1.700°C bis 3.000°C, insbesondere bei 2.000°C bis 2.500°C, dies unter Schutzgas.

Die Erfindung soll nachfolgend anhand von Beispielen noch näher erläutert werden:

### Beispiel 1 (Polykondensation von Alcell-Hartholz-Lignin mit 2,6-Bis(hydroxymethyl)-p-kresol (Labormaßstab)):

Lignin (3 g) wurde in 1,4-Dioxan (20 ml) gelöst, 2,6-Bis(hydroxymethyl)-p-kresol und Methansulfonsäure (0,270 ml) zugegeben. Das Umsetzungsgemisch wurde für 22 h bei 100°C gerührt. Nach Abkühlen auf Raumtemperatur wurde das Gemisch in Wasser ausgefällt. Zur Aufreinigung wurde das Präzipitat 3-mal zu je 2 h mit heißem Wasser extrahiert, um die Methansulfonsäure (MSA) und 1,4-Dioxan zu entfernen.

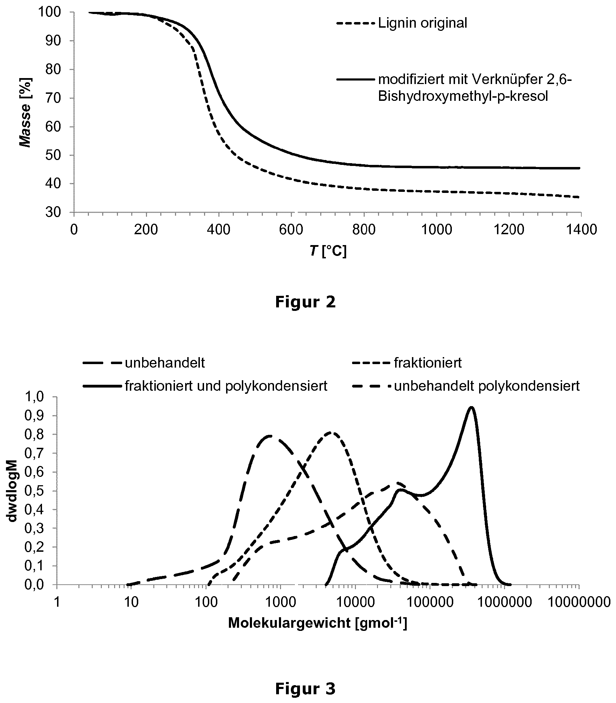

Zur Erläuterung des in obiger Weise erhaltenen erfindungsgemäßen modifizierten Lignins sei auf die folgende Figur 2 verwiesen. Diese zeigt TGA-Messungen (Helium, 10 K/min) von polykondensiertem Hartholz-Lignin mit 2,6-Bis-hydroxymethyl-p-kresol als Verknüpfungsverbindung C aus diesem Beispiel 1 und von unbehandeltem Lignin, synthetisiert unter Verwendung von 1 Gewichtsteil Verknüpfungsverbindung auf 3 Gewichtsteile Lignin und 2 Gewichtsteile Methansulfonsäure (MSA). Deutlich zu erkennen ist die von 35 auf 46 Gew.-% angestiegene Kohlenstoff-Restmasse des erfindungsgemäßen polykondensierten Umsetzungsproduktes.

Polykondensat: (¹H-NMR (dmso-d₆, 400 MHz): δ (ppm) = 0,61, 0,99, 1,71, 3,54, 6,69; ¹³C-NMR (dmso-d₆, 101 MHz): δ (ppm) = 14,4, 20,8, 29,6, 56,4, 60,2, 106,9, 127,6, 148,4; ATR-IR: v (cm⁻¹) = 3345, 2933, 2842, 2114, 1702, 1605, 1512, 1455, 1309, 1211, 1113, 1029, 910, 870.

### Beispiel 2 (Polykondensation von Alcell-Hartholz-Lignin mit 2,6-(Hydroxymethyl)-p-kresol (Technikum)):

Lignin (1 kg) wurde in 1,4-Dioxan (3,5 l) gelöst und in einen 5 l-Stahlreaktor gegeben. Nach Zugabe von 2,6-Bis(hydroxymethyl)-p-kresol (120 g) und Methansulfonsäure (93 ml) wurde das Umsetzungsgemisch unter mechanischem Rühren für 7 h auf 95 °C erhitzt. Nach Beendigung der Umsetzung wurde das Umsetzungsgemisch in Eiswasser ausgefällt und der ausgefallene Feststoff abgetrennt. Zu dessen Aufreinigung wurde es mehrmals mit reichlich Wasser gewaschen und anschließend gefriergetrocknet.

### Beispiel 3 (Synthese eines p-Kresol-Resols):

p-Kresol (1 kg) wurde bei 50 °C geschmolzen und in einen 5 l-Stahlreaktor transferiert. Nach Zugabe einer wässrigen Lösung von Formaldehyd (37 %, 1 l) und Einstellen des pH-Wertes mit Natronlauge auf pH 9 wurde der Reaktor mit Stickstoff gespült und verschlossen. Das Gemisch wurde für ca. 5 h auf 95 °C erhitzt bis zur Erhöhung des Drehmoments der Rühreinheit, wonach 1,4-Dioxan (3 I) und weiteres Formaldehyd (37 %, 200 ml) zugegeben wurden. Die Umsetzung wurde für weitere 2 h fortgeführt. Nach Beendigung der Umsetzung wurde die Lösung in kaltem Wasser ausgefällt, der Feststoff mit reichlich Wasser und Methanol gewaschen und schließlich gefriergetrocknet. ¹H-NMR (dmso-d₆, 400 MHz): δ (ppm) = 2,0 - 2,3 (CH₃), 3,48 (Phenol-OH), 3,83 (-CH₂-), 4,4 - 4,9 (-CH₂-O-CH₂-), 5,22 (-CH₂-OH), 6,6 - 7,2 (aromat. H); ¹³C-NMR (dmso-d₆, 101 MHz): δ (ppm) = 21, 26, 31, 58, 60, 69, 129, 150; ATR-IR: v (cm⁻¹) = 3195, 2915, 2877, 2326, 2326, 1606, 1482, 1371, 1206, 1154, 1062, 996, 959, 913, 858.

### Beispiel 4 (Polykondensation von Alcell-Hartholz-Lignin mit p-Kresol-Resol):

Lignin (1,5 g) wurde in zuvor separat in 1,4-Dioxan (30 ml) gelöstem p-Kresol-Resol (5,2 g) unter Rühren gelöst. Nach Zugabe von Methansulfonsäure (70 µl) wurde das Umsetzungsgefäß unter Stickstoff verschlossen und für 22 h bei 100°C gerührt. Nach Beendigung der Umsetzung wurde das Umsetzungsgemisch in Eiswasser ausgefällt und der ausgefallene Feststoff abgetrennt. Zu dessen Aufreinigung wurde es mehrmals mit reichlich Wasser gewaschen und anschließend gefriergetrocknet.

### (10 mol-% Methansulfonsäure (MSA)):

¹H-NMR (dmso-d₆, 400 MHz): δ (ppm) = 1,23, 2,09, 3,40, 3,58, 3,87, 4,86, 5,26, 6,66; ¹³C-NMR (dmso-d₆, 101 MHz): δ (ppm) = 21, 31, 67, 128, 150; ATR-IR: v (cm⁻¹) = 3238, 3006, 2611, 2860, 2345, 2116, 1703, 1603, 1779, 1452, 1286, 1222, 1117, 1030, 858, 783, 558.

Die Figur 3 zeigt die Molekulargewichtsverteilungen der erfindungsgemäßen Umsetzungsprodukte aus Beispiel 1 und 4 im Vergleich mit herkömmlichem unbehandeltem Lignin. Tabelle 1 zeigt eine Auflistung der Molekulargewichte der Edukte und Produkte der erfindungsgemäßen Umsetzung des Molekulargewichtsaufbaus. Insbesondere erhöhte sich das gewichtsmittlere Molekulargewicht der Umsetzung von Hartholz-Lignin mit 2,6-Bishydroxymethyl-p-kresol und 20 mol-% Methansulfonsäure (MSA) um mehr als den Faktor 100 auf 57.000 g/mol.

### Beispiel 4a (Polykondensation von fraktioniertem Alcell-Hartholz-Lignin mit 2,6-Bis(hydroxymethyl)-p-kresol

Hartholz-Lignin wurde in Ethanol für 15 min suspendiert und abfiltriert. Das niedermolekulare Lignin geht dabei in Lösung. Durch die Extraktion mit Ethanol konnte ein fraktioniertes Lignin mit einem zahlenmittleren Molekulargewicht von 2200 gmol⁻¹ (original 500 gmol⁻¹) in 66 gewichtsprozentiger Ausbeute erhalten werden. Die Polykondensation dieses fraktionierten Lignins mit 2,6-Bishydroxymethyl-*p*-kresol und gleichen Bedingungen wie in Beispiel 4 führte zu einem Produkt mit einem *Mₙ* von 33.000 gmol⁻¹ sowie einem *M_{w}* von 133.000 gmol⁻¹.

In diesem Zusammenhang sei auf die nachfolgende Figur 3 verwiesen: Diese zeigt die Molekulargewichtsverteilungen von mit 2,6-Bis-hydroxymethyl-p-kresol polykondensiertem Hartholz-Lignin, unbehandeltem Lignin, fraktioniertem Lignin und von mit 2,6-Bis-hydroxymethyl-p-kresol polykondensiertem fraktioniertem Hartholz-Lignin. Die Bestimmungen erfolgten über Gelpermeationschromatographie (GPC) in N,N-Dimethylacetamid (DMAc)/Lithiumbromid (LiBr) 5 g/l⁻¹.

### Beispiel 5 (Polykondensation von UPM Biopiva-Weichholz-Lignin mit 2,6-(Hydroxymethyl)-p-kresol):

Weichholz-Lignin (3 g) wurde in 1,4-Dioxan (20 ml) gelöst. Dann wurden 2,6-Bis(hydroxymethyl)-p-kresol (0,35 g) und p-Toluolsulfonsäure (0,36 g) zugegeben. Das Umsetzungsgemisch wurde für 22 h bei 95°C gerührt. Nach Abkühlen auf Raumtemperatur wurde das Gemisch in Wasser ausgefällt. Zur Aufreinigung wurde das Präzipitat 3-mal für je 2 h mit heißem Wasser extrahiert, um p-Toluolsulfonsäure (TsOH) und 1,4-Dioxan zu entfernen.

### Beispiel 6 (Herstellen der Spinnmasse und Verspinnen des Materials nach Beispiel 2):

Das Produkt (110 g) aus Beispiel 2 wurde in DMF (100 ml) unter mechanischem Rühren durch langsame Zugabe zum Lösungsmittel innerhalb von 24 h gelöst. Die Lösung wurde 1 Woche im Kühlschrank bei 5°C gelagert und anschließend bei Raumtemperatur für 4 h bei 100 mbar entgast. Die Spinnmasse zeigte sich in rheologischen Messungen scherverdünnend mit Viskositäten zwischen 100 und 1000 Pa·s im Frequenzbereich von 100 - 0,1 1/s (10 % Deformation). Das blasenfreie Material konnte anschließend mittels Kolbenspinnanlage und Multifilament-Spinndüse (150 µm x 64) kontinuierlich bei 20°C zu feinen Fasern trocken-versponnen werden. Die Austrittsgeschwindigkeit an der Düse lag bei 5 m/min, die Aufspul-Geschwindigkeit bei 75 m/min.

### Beispiel 7 (Stabilisierung und Carbonisierung der Fasern nach Beispiel 6):

Die Lignin-Fasern wurden oxidativ thermostabilisiert. Hierbei wurden die Fasern von Raumtemperatur mit einer Heizrate von 0,25 K/min unter Luft in einem Muffelofen (der Firma Nabertherm GmbH) auf 250°C erhitzt. Die Fasern wurden hierbei als Monofilament eingesetzt. Carbonisiert wird unter reinem Stickstoff von Raumtemperatur bis 1000°C und einer Heizrate von 10 K/min in einem Hochtemperaturofen (von der Firma Gero).

### Beispiel 8 (Derivatisierung des Umsetzungsproduktes nach Beispiel 2):

Lignin (1 mol Hydroxylgruppen, 100 g) wurde in einem 1 l Einhals-Rundkolben vorgelegt und in Pyridin (500 ml) unter Rühren gelöst. Über einen Tropftrichter wurde Hexanoylchlorid (1 mol, 134,6 g) langsam hinzugetropft. Nach vollständiger Zugabe wurde das Umsetzungsgemisch für 3 Stunden auf 80°C erhitzt, anschließend über Nacht bei Raumtemperatur gerührt. Zur Aufarbeitung wurde das Umsetzungsgemisch eingeengt und in verdünnte Salzsäure (0,1 N) ausgefällt. Der erhaltene Feststoff wurde mit demin. Wasser gewaschen und anschließend 24 h mit gesättigter wässriger Natriumhydrogencarbonat-Lösung gerührt, gefolgt von demin. Wasser und 0,1 N Salzsäure, um überschüssige Hexansäure als Na-Hexanoat zu entfernen sowie restliches Pyridin als Hydrochlorid zu extrahieren. Das Produkt wurde unter vermindertem Druck bei 1*10⁻² mbar für 24 h gefriergetrocknet. Man erhielt einen dunkelbraunen bis schwarzen Feststoff.

In der folgenden Tabelle 1 finden sich die Molekulargewichte der Edukte und Produkte aus den Beispielen 1 bis 5.

**Tabelle 1**

| | *Mₙ* [gmol⁻¹] | *M_{W}* [gmol⁻¹] | *PDI* |
|---|---|---|---|
| Lignin, unbehandelt | 500 | 2.800 | 5,1 |
| p-Kresol-Resol | 5.000 | 6.600 | 1,3 |
| Polykondensiertes Lignin (*p*-Kresol-Resol-Verknüpfungsverbindung, 1 Teil MSA auf 3 Teile Lignin) | 9.000 | 33.800 | 3,9 |
| Polykondensiertes fraktioniertes Lignin (2,6-Bis(hydroxymethyl)-p-kresol Verknüpfungsverbindung, 1 Teil MSA auf 3 Teile Lignin) | 33.000 | 133.000 | 4,0 |
| Polykondensiertes Lignin (2,6-Bishydroxymethyl-*p*-kresol-Verknüpfungsverbindung, 1 Teil MSA auf 3 Teile Lignin)) | 3.200 | 24.000 | 7,5 |
| Polykondensiertes Lignin (2,6-Bishydroxymethyl-*p*-kresol-Verknüpfungsverbindung, (2 Teile MSA auf 3 Teile Lignin) | 4.600 | 57.000 | 12,0 |
| Polykondensiertes Lignin (UPM Biopiva-)Weichholz (2,6-Bishydroxymethyl-*p-*kresol-Verknüpfungsverbindung, 2 Teile | 4.800 | 40.800 | 8,4 |
| *p*-TsOH auf 3 Teile Lignin) | | | |
| Polykondensiertes Alcell-Hartholz-Methyl-Lignin (2,6-Bishydroxymethyl-*p*-kresol-Verknüpfungsverbindung, 2 Teile *p*-TsOH auf 3 Teile Lignin) | 5.000 | 37.600 | 7,5 |

Anm.: Die Molekulargewichte wurden bestimmt durch die GPC-Messungen in DMAc/LiBr 5 gl⁻¹ und konventioneller Kalibrierung gegen PMMA Standards. Die erfindungsgemäßen Produkte wurden stets synthetisiert unter Verwendung des molaren Verhältnisses Verknüpfer:Lignin von 1:2,85 und 1 - 2Mol Säure pro 3 Mol Lignin.

## Patentansprüche

1. Modifiziertes Lignin auf Basis von substituiertem und/oder unsubstituiertem Lignin, wobei die Lignin-Moleküle des substituierten und unsubstituierten Lignins (A) zur Molekulargewichtserhöhung mit Verknüpfungseinheiten (B) verbunden sind, **dadurch gekennzeichnet, dass** die Verknüpfungseinheiten (B) aromatisch sind und mit den Lignin-Molekülen (A) über eine Methylengruppe verbunden sind, wobei die Verknüpfungseinheit (B) auf eine Umsetzung des Lignins (A) mit einer aromatischen Verknüpfungsverbindung (C) zurückgeht, die mindestens zwei Hydroxymethyl-Gruppen enthält und das modifizierte Lignin ein zahlenmittleres Molekulargewicht von 2000 bis 50000 g/mol aufweist, wobei das zahlenmittlere Molekulargewicht mittels der Methoden in der Beschreibung bestimmt wird.

2. Modifiziertes Lignin nach Anspruch 1, **dadurch gekennzeichnet, dass** das substituierte Lignin durch die Formeln
L-O-CORₓ (I)
und/oder
L-OR_{y} (II),
dargestellt ist,
worin bedeuten:
der Rest L-O in den Formeln (I) und (II) einen veresterten oder veretherten Lignin-Rest,
der Rest -CO-Rₓ in der Formel (I) einen Acyl-Rest,
die Reste Rₓ und R_{y} einen aliphatischen und/oder aromatischen Rest.

3. Modifiziertes Lignin nach Anspruch 2, **dadurch gekennzeichnet, dass** die aromatischen Reste Rₓ und R_{y} einen Aryl-Rest, insbesondere einen Phenol-, Benzyl-, Methoxybenzyl- und/oder einen 3-Phenylpropenyl-Rest, darstellen.

4. Modifiziertes Lignin nach Anspruch 2, **dadurch gekennzeichnet, dass** die aliphatischen Reste Rₓ und R_{y} einen geradkettigen oder verzweigten C₁₋₆-AlkylRest, insbesondere einen Methyl-, Ethyl-, n-Propyl-, Isopropyl-, tert.-Butyl- oder einen neo-Pentyl-Rest, darstellen.

5. Modifiziertes Lignin nach mindestens einem der vorhergehenden Ansprüche, **dadurch gekennzeichnet, dass** die Verknüpfungseinheit (B) auf eine Umsetzung des Lignins (A) mit einer aromatischen Verknüpfungsverbindung (C) zurückgeht, die mindestens zwei terminale Hydroxymethyl-Gruppen aufweist und monomer, oligomer und/oder polymer ist, insbesondere ein 2,6-Bis(hydroxymethyl)-p-kresol, ein p-Kresol-basiertes Resol, Phenol-basiertes Resol und/oder eine Novolak-artige Verbindung mit terminal angeordneten Hydroxymethyl-Gruppen darstellt.

6. Modifiziertes Lignin nach mindestens einem der vorhergehenden Ansprüche, **dadurch gekennzeichnet, dass** das molare Verhältnis der Verknüpfungseinheit (B) zu den Lignin-Molekülen (A), substituiert oder unsubstituiert, etwa 1:1 bis 1:7, insbesondere 1:2 bis 1:4 und besonders bevorzugt etwa 1:3, beträgt.

7. Modifiziertes Lignin nach mindestens einem der vorhergehenden Ansprüche, **dadurch gekennzeichnet, dass** dessen Aschegehalt, bestimmt nach DIN EN ISO 3451-4, weniger als 0,1 Gew.-% beträgt.

8. Modifiziertes Lignin nach mindestens einem der vorhergehenden Ansprüche, **dadurch gekennzeichnet, dass** das modifizierte Lignin ein zahlenmittleres Molekulargewicht von 4000 bis 40000 g/mol aufweist.

9. Verfahren zur Herstellung eines modifizierten Lignins gemäß Anspruch 1-8, **dadurch gekennzeichnet, dass** das substituierte und/oder unsubstituierte Lignin (A) in einem Lösungsmittel gelöst und in der Lösung mit einer aromatischen Verknüpfungsverbindung (C), die mindestens zwei Hydroxymethyl-Gruppen, insbesondere zwei terminale Hydroxymethyl-Gruppen, aufweist, in Gegenwart einer organischen Säure (D) bei erhöhter Temperatur, insbesondere von 60°C bis 160°C, zu modifiziertem Lignin umgesetzt wird.

10. Verfahren nach Anspruch 9, **dadurch gekennzeichnet, dass** die Umsetzung während 5 bis 24 h, insbesondere 7 bis 15 h, durchgeführt wird.

11. Verfahren nach mindestens einem der Ansprüche 9 oder 10, **dadurch gekennzeichnet, dass** ein substituiertes Lignin (A) entsprechend den Definitionen der vorhergehenden Ansprüche umgesetzt wird.

12. Verfahren nach mindestens einem der Ansprüche 9 bis 11, **dadurch gekennzeichnet, dass** die Verknüpfungsverbindung (C) monomer, oligomer und/oder polymer ist, insbesondere ein 2,6-Bis(hydroxymethyl)-p-kresol, ein p-Kresol-basiertes Resol, Phenol-basiertes Resol und/oder eine Novolak-artige Verbindung mit terminal angeordneten Hydroxymethyl-Gruppen darstellt.

13. Verfahren nach mindestens einem der Ansprüche 9 bis 12, **dadurch gekennzeichnet, dass** die oligomere und/oder die polymere Verknüpfungsverbindung (C) eine Polydispersität unter 2, insbesondere unter 1,5, aufweist.

14. Verfahren nach mindestens einem der Ansprüche 9 bis 13, **dadurch gekennzeichnet, dass** die Verknüpfungsverbindung (C) und das Lignin (A) in einem molaren Verhältnis von etwa 1:1 bis 1:7, insbesondere 1:2 bis 1:4, besonders bevorzugt von etwa 1:3, zu modifiziertem Lignin umgesetzt werden.

15. Verfahren nach mindestens einem der Ansprüche 9 bis 14, **dadurch gekennzeichnet, dass** die organische Säure (D), insbesondere in Form der p-Toluolsulfonsäure (p-TsOH) und/oder der Methansulfonsäure (MSA), einen pKₛ-Wert von < 3, insbesondere von < 2, aufweist.

16. Verfahren nach mindestens einem der Ansprüche 9 bis 15, **dadurch gekennzeichnet, dass** auf 1 Mol Lignin (A) etwa 0,2 bis 1 Mol organische Säure (D), insbesondere 0,5 bis 1 Mol, eingesetzt wird.

17. Verwendung des modifizierten Lignins, erhältlich nach einem Verfahren nach mindestens einem der Ansprüche 9 bis 16 zur Herstellung von Präkursorfasern durch Schmelzspinnen, insbesondere unter Einbezug eines Weichmachers, oder durch Nass-, Trocken-Nass- oder Trockenspinnen.

18. Verwendung des modifizierten Lignins nach Anspruch 17, **dadurch gekennzeichnet, dass** es zum Zweck des Nass-, Trocken-Nass- und Trockenspinnens zu Präkursoren 1. eine komplexe Viskosität in Lösung von 10 bis 500 Pa.s, insbesondere von 50 bis 300 Pa.s, bestimmt nach DIN 53019, und/oder 2. ein zahlenmittleres Molekulargewicht von 2000 bis 50000 g/mol, insbesondere von 4000 bis 40000 g/mol, aufweist.

19. Verwendung des modifizierten Lignins nach Anspruch 17, **dadurch gekennzeichnet, dass** es zum Zweck des Schmelzspinnens zu Präkursorfasern 1. eine komplexe Viskosität von 50 bis 2000 Pa.s, insbesondere von 100 bis 1000 Pa.s, bestimmt nach DIN 53019-4, und/oder 2. eine Glasübergangstemperatur (Tg) von 80°C bis 220°C, insbesondere von 100°C bis 180°C, bestimmt über Dynamische Differenzkalorimetrie nach DIN EN ISO 11357-2, und/oder 3. ein zahlenmittleres Molekulargewicht von 2000 bis 15000 g/mol, insbesondere von 4000 bis 10000 g/mol, aufweist.

20. Verwendung des modifizierten Lignins nach einem der vorhergehenden Ansprüche 17 bis 19, wonach die Präkursorfasern zur Herstellung von Carbonfasern durch Carbonisierung, gegebenenfalls mit vorausgehender oxidativer Thermostabilisierung und gegebenenfalls mit nachfolgender Graphitisierung, verwendet werden.

## Claims

1. A modified lignin based on substituted and/or unsubstituted lignin, wherein the lignin molecules of the substituted and unsubstituted lignin (A) are linked to linking units (B) to increase the molecular weight, **characterized in that** the linking units (B) are aromatic and are linked to the lignin molecules (A) via a methylene group, wherein the linking unit (B) is derived from a reaction of the lignin (A) with an aromatic linking compound (C) which contains at least two hydroxymethyl groups, and wherein the modified lignin has a number-average molecular weight of 2000 to 50,000 g/mol, the number-average molecular weight being determined by means of the methods in the description.

2. The modified lignin according to claim 1, **characterised in that** the substituted lignin is represented by the formulae
L-O-CORₓ (I)
and/or
L-OR_{y} (II),
in which:
the residue L-O in formulae (I) and (II) represents an esterified or etherified lignin moiety,
the moiety -CO-Rₓ in formula (I) represents an acyl moiety,
the moieties Rₓ and R_{y} represent an aliphatic and/or aromatic moiety.

3. The modified lignin according to claim 2, **characterised in that** the aromatic moieties Rₓ and R_{y} represent an aryl moiety, in particular a phenol, benzyl, methoxybenzyl and/or a 3-phenylpropenyl moiety.

4. The modified lignin according to claim 2, **characterised in that** the aliphatic moieties Rₓ and R_{y} represent a straight-chain or branched C1-6 alkyl moiety, in particular a methyl, ethyl, n-propyl, isopropyl, tert-butyl or neo-pentyl moiety.

5. The modified lignin according to at least one of the preceding claims, **characterized in that** the linking unit (B) is based on a reaction of the lignin (A) with an aromatic linking compound (C) which has at least two terminal hydroxymethyl groups and is monomeric, oligomeric and/or polymeric, in particular a 2,6-bis(hydroxymethyl)-p-cresol, a p-cresol-based resol, phenol-based resol and/or a novolak-like compound with terminally arranged hydroxymethyl groups.

6. The modified lignin according to at least one of the preceding claims, **characterised in that** the molar ratio of the linking unit (B) to the lignin molecules (A), substituted or unsubstituted, is about 1:1 to 1:7, in particular 1:2 to 1:4, and particularly preferably about 1:3.

7. The modified lignin according to at least one of the preceding claims, **characterised in that** its ash content, determined according to DIN EN ISO 3451-4, is less than 0.1% by weight.

8. The modified lignin according to at least one of the preceding claims, **characterised in that** the modified lignin has a number-average molecular weight of 4000 to 40,000 g/mol.

9. A process for the preparation of a modified lignin according to claim 1-8, **characterized in that**, the substituted and/or unsubstituted lignin (A) is dissolved in a solvent and reacted in the solution with an aromatic linking compound (C) which has at least two hydroxymethyl groups, in particular two terminal hydroxymethyl groups, in the presence of an organic acid (D) at elevated temperature, in particular from 60°C to 160°C, to give modified lignin.

10. The process according to claim 9, **characterised in that** the reaction is carried out for 5 to 24 h, in particular 7 to 15 h.

11. The process according to at least one of claims 9 or 10, **characterised in that** a substituted lignin (A) is reacted according to the definitions of the preceding claims.

12. The process according to at least one of claims 9 to 11, **characterised in that** the linking compound (C) is monomeric, oligomeric, and/or polymeric, and represents in particular a 2,6-bis(hydroxymethyl)-p-cresol, a p-cresol-based resol, phenol-based resol, and/or a novolak-like compound with terminally arranged hydroxymethyl groups.

13. The process according to at least one of claims 9 to 12, **characterised in that** the oligomeric and/or the polymeric linking compound (C) has a polydispersity below 2, in particular below 1.5.

14. The process according to at least one of claims 9 to 13, **characterised in that** the linking compound (C) and the lignin (A) are reacted to modified lignin in a molar ratio of about 1:1 to 1:7, in particular 1:2 to 1:4, particularly preferably of about 1:3.

15. The process according to at least one of claims 9 to 14, **characterised in that** the organic acid (D), in particular in the form of p-toluenesulfonic acid (p-TsOH) and/or methanesulfonic acid (MSA), has a pKₛ value of < 3, in particular of < 2.

16. The process according to at least one of claims 9 to 15, **characterised in that** about 0.2 to 1 mol, in particular about 0.5 to 1 mol, of organic acid (D) are used per 1 mol of lignin (A).

17. A use of the modified lignin obtainable by a process according to at least one of claims 9 to 16 for the production of precursor fibres by melt spinning, in particular with the inclusion of a softener, or by wet, dry-wet, or dry spinning.

18. The use of the modified lignin according to claim 17, **characterized in that**, for the purpose of wet, dry-wet, and dry spinning into precursors, it has 1. a complex viscosity in solution in the range from 10 to 500 Pa.s, in particular from 50 to 300 Pa.s, as determined according to DIN 53019, and/or 2. a number-average molecular weight in the range from 2000 to 50,000 g/mol, in particular from 4000 to 40,000 g/mol.

19. The use of the modified lignin according to claim 17, **characterized in that**, for the purpose of melt spinning into precursor fibres, it has 1. a complex viscosity in the range from 50 to 2000 Pa.s, in particular from 100 to 1000 Pa.s, as determined according to DIN 53019-4, and/or 2. a glass transition temperature (Tg) in the range of 80°C to 220°C, in particular of 100°C to 180°C, as determined by differential scanning calorimetry according to DIN EN ISO 11357-2, and/or 3. a number-average molecular weight in the range of 2000 to 15,000 g/mol, in particular of 4000 to 10,000 g/mol.

20. The use of the modified lignin according to any one of the preceding claims 17 to 19, according to which the precursor fibres are used for the production of carbon fibres by carbonisation, optionally preceded by oxidative thermostabilization, and optionally followed by graphitisation.

## Revendications

1. Lignine modifiée à partir de lignine substituée et/ou non substituée, dans laquelle les molécules de lignine de la lignine substituée et non substituée (A) sont reliées à des unités de liaison (B) pour augmenter le poids moléculaire, **caractérisée en ce que** les unités de liaison (B) sont aromatiques et sont reliées aux molécules de lignine (A) par l'intermédiaire d'un groupe méthylène, dans laquelle l'unité de liaison (B) résulte d'une réaction de la lignine (A) avec un composé de liaison aromatique (C) contenant au moins deux groupes hydroxyméthyle, et la lignine modifiée présente un poids moléculaire moyen en nombre compris entre 2000 et 50 000 g/mol, dans laquelle le poids moléculaire moyen en nombre est déterminé selon des procédés décrits dans la description.

2. Lignine modifiée selon la revendication 1, **caractérisée en ce que** la lignine substituée est représentée par les formules
L-O-CORₓ (I)
et/ou
L-OR_{y} (II),
,
dans lesquelles :
le radical L-O dans les formules (I) et (II) désigne un radical de lignine esterifiée ou étherifiée,
le radical -CO-Rₓ dans la formule (I) désigne un radical d'acyle,
les radicaux Rₓ et R_{y} désignent un radical aliphatique et/ou aromatique.

3. Lignine modifiée selon la revendication 2, **caractérisée en ce que** les radicaux aromatiques Rₓ et R_{y} représentent un radical aryle, en particulier un radical phénol, benzyle, méthoxybenzyle et/ou 3-phénylpropényle.

4. Lignine modifiée selon la revendication 2, **caractérisée en ce que** les radicaux aliphatiques Rₓ et R_{y} représentent un radical alkyle en C₁₋₆ à chaîne droite ou ramifié, en particulier un radical méthyle, éthyle, n-propyle, isopropyle, tert-butyle ou néo-pentyle.

5. Lignine modifiée selon au moins l'une quelconque des revendications précédentes, **caractérisée en ce que** l'unité de liaison (B) résulte d'une réaction de la lignine (A) avec un composé de liaison aromatique (C) qui présente au moins deux groupes hydroxyméthyle terminaux et qui est monomère, oligomère et/ou polymère, en particulier représente un 2,6-bis(hydroxyméthyl)-p-crésol, un résol à base de p-crésol, un résol à base de phénol et/ou un composé de type Novolak avec des groupes hydroxyméthyle disposés en position terminale.

6. Lignine modifiée selon au moins l'une quelconque des revendications précédentes, **caractérisée en ce que** le rapport molaire de l'unité de liaison (B) aux molécules de lignine (A), substituées ou non substituées, est d'environ 1:1 à 1:7, en particulier 1:2 à 1:4 et de manière particulièrement préférée d'environ 1:3.

7. Lignine modifiée selon au moins l'une quelconque des revendications précédentes, **caractérisée en ce que** sa teneur en cendres, déterminée selon la norme DIN EN ISO 3451-4, est inférieure à 0,1 % en poids.

8. Lignine modifiée selon au moins l'une quelconque des revendications précédentes, **caractérisée en ce que** la lignine modifiée présente un poids moléculaire moyen en nombre de 4000 à 40 000 g/mol.

9. Procédé de fabrication d'une lignine modifiée selon les revendications 1 à 8, **caractérisé en ce que** la lignine (A) substituée et/ou non substituée est dissoute dans un solvant et que, dans la solution, elle est mise en réaction avec un composé de liaison aromatique (C) présentant au moins deux groupes hydroxyméthyle, notamment deux groupes hydroxyméthyle terminaux, en présence d'un acide organique (D) à une température élevée, en particulier de 60 °C à 160 °C, pour obtenir de la lignine modifiée.

10. Procédé selon la revendication 9, **caractérisé en ce que** la réaction est réalisée pendant 5 à 24 h, en particulier 7 à 15 h.

11. Procédé selon au moins l'une quelconque des revendications 9 ou 10, **caractérisé en ce qu'**une lignine substituée (A) conformément aux définitions des revendications précédentes est mise en réaction.

12. Procédé selon au moins l'une quelconque des revendications 9 à 11, **caractérisé en ce que** le composé de liaison (C) est monomère, oligomère et/ou polymère, représentant en particulier un 2,6-bis(hydroxyméthyl)-p-crésol, un résol à base de p-crésol, un résol à base de phénol et/ou un composé de type Novolak avec des groupes hydroxyméthyle disposés en position terminale.

13. Procédé selon au moins l'une quelconque des revendications 9 à 12, **caractérisé en ce que** les oligomères et/ou le composé de liaison polymère (C) présentent une polydispersité inférieure à 2, en particulier inférieure à 1,5.

14. Procédé selon au moins l'une quelconque des revendications 9 à 13, **caractérisé en ce que** le composé de liaison (C) et la lignine (A) sont transformés en lignine modifiée dans un rapport molaire d'environ 1:1 à 1:7, en particulier de 1:2 à 1:4, de manière particulièrement préférée d'environ 1:3.

15. Procédé selon au moins l'une quelconque des revendications 9 à 14, **caractérisé en ce que** l'acide organique (D), en particulier sous forme d'acide p-toluolsulfonique (p-TsOH) et/ou d'acide méthanosulfonique (MSA), présente une valeur pKₛ < 3, en particulier < 2.

16. Procédé selon au moins l'une quelconque des revendications 9 à 15, **caractérisé en ce que** sur 1 mol de lignine (A), on utilise environ 0,2 à 1 mol d'acide organique (D), en particulier 0,5 à 1 mol.

17. Utilisation de la lignine modifiée, obtenue selon un procédé conforme à au moins l'une quelconque des revendications 9 à 16, pour la fabrication de fibres précurseurs par filage à chaud, en particulier en ajoutant un plastifiant, ou par filage par voie humide, sèche-humide ou sèche.

18. Utilisation de la lignine modifiée selon la revendication 17, **caractérisée en ce qu'**elle présente 1. une viscosité complexe en solution de 10 à 500 Pa.s, en particulier de 50 à 300 Pa·s, déterminée selon la norme DIN 53019, et/ou 2. un poids moléculaire moyen en nombre de 2000 à 50 000 g/mol, en particulier de 4000 à 40 000 g/mol, pour le filage par voie humide, sèche et humide en des précurseurs.

19. Utilisation de la lignine modifiée selon la revendication 17, **caractérisée en ce qu'**elle présente, aux fins du filage par fusion en fibres précurseurs, 1. une viscosité complexe de 50 à 2000 Pa.s, en particulier de 100 à 1000 Pa.s, déterminée selon la norme DIN 53019-4, et/ou 2. une température de transition vitreuse (Tg) de 80 °C à 220 °C, en particulier de 100 °C à 180 °C, déterminée par calorimétrie différentielle à balayage selon la norme DIN EN ISO 11357-2, et/ou 3. un poids moléculaire moyen en nombre de 2000 à 15 000 g/mol, en particulier de 4000 à 10 000 g/mol.

20. Utilisation de la lignine modifiée selon l'une quelconque des revendications précédentes 17 à 19, selon laquelle les fibres précurseurs sont utilisées pour la fabrication de fibres de carbone par carbonisation, le cas échéant avec thermostabilisation oxydative préalable et le cas échéant avec graphitisation ultérieure.
